# EUROPÄISCHE PATENTSCHRIFT

(11) **EP 2 134 485 B1**
(45) Veröffentlichungstag und Bekanntmachung des Hinweises auf die Patenterteilung: **03.11.2010**
(21) Anmeldenummer: 08734329.9
(22) Anmeldetag: 28.02.2008
(51) Int. Cl.: B21D 22/04, B21D 35/00, B21D 53/88, B60N 2/30

(54) **VERFAHREN ZUM HERSTELLEN EINES LAGERBOLZEN-BAUTEILS**
METHOD FOR PRODUCING A BEARING JOURNAL COMPONENT
PROCÉDÉ DE FABRICATION D'UN COMPOSANT AXE DE PALIER

(30) Priorität: 03.03.2007 DE 102007010373; 03.03.2007 DE 102007062784
(43) Veröffentlichungstag der Anmeldung: 23.12.2009
(73) Patentinhaber: Faurecia Autositze GmbH, 31655 Stadthagen (DE)
(72) Erfinder: HÄNTSCH, Andreas, 30159 Hannover (DE); KEMPF, Heiner, 30449 Hannover (DE)
(74) Vertreter: Bremer, Ulrich
(86) Internationale Anmeldenummer: PCT/DE2008/000349
(87) Internationale Veröffentlichungsnummer: WO 2008/106934

(56) Entgegenhaltungen:
- EP-A- 1 857 625
- DE-C1- 10 133 708

## Beschreibung

Die Erfindung betrifft ein Verfahren zum Herstellen eines Lagerbolzen-Bauteils und ein hierdurch hergestelltes Lagerbolzen-Bauteil.

Bei Fahrzeugsitzen mit schwenk- und/oder klappbarer Rückenlehne wird die Lehnenachse im Allgemeinen durch einen am Lehnenteil ausgebildeten Bolzen gebildet, der in eine Lageraufnahme bzw. ein Lagerauge des Sitzrahmens eingesetzt wird. Diese Lageranbindung muss hinreichend stabil sein, um die bei normaler Fahrt auftretenden Kräfte, und ergänzend die bei einem möglichen Crash auftretenden hohen Kräfte aufzufangen.

Hierzu wird im Allgemeinen ein kaltgepresstes und nachfolgend heiß geschmiedetes Bauteil verwendet, das einen länglichen Befestigungsbereich und einen Bolzen aufweist, wobei der längliche Befestigungsbereich am Lehnenteil bzw. dessen Struktur angeschweißt wird und der Bolzen sich von dem Befestigungsbereich aus nach außen erstreckt und ein Innengewinde aufweist, in das eine Schraube eingeschraubt wird. Dieser vorstehende Bolzen mit der eingesetzten Schraube dient somit als Lagerbolzen zur Definition der Schwenkachse.

Derartige kalt gepresste und geschmiedete Bauteile aus Stahl sind hinreichend fest, um die erforderlichen Kräfte und Momente aufzufangen. Sie sind jedoch recht kostspielig in der Herstellung und weiterhin relativ schwer.

Die DE 101 33 708 C1 zeigt ein Befestigungssystem für eine geteilte Kraftfahrzeug-Fondlehne, bei dem zwei Lehnenteile und ein zwischen ihnen angeordneter Mittenbeschlag durch einen Lagerbolzen verbunden sind, der einen hinreichend langen Bolzenschaft aufweist, wobei an seinem freien Ende zwei beabstandete Einstiche ausgebildet sind. Die zweiteilige Form des Anspruchs 1 basiert auf diese Patentschrift.

Die nachveröffentlichte EP 1 857 625 A1 beschreibt ein Verfahren zum Herstellen eines Trägerbauteils für eine Aufhängung. Das Trägerbauteil weist eine Platte auf, die mittels Durchgangslöchern an einem Rahmen einer Tür oder Fenster, bzw. eines festen Rahmens befestigt werden kann. Von der Platte erstreckt sich ein hohles Element ab, das als Lagerbolzen zum Einsatz in ein entsprechendes Loch der Tür bzw. des festen Rahmens dient. Das Trägerbauteil kann einteilig durch ein Folge von Tiefzieh-Verfahren oder - Schritten hergestellt werden, wobei von einer im wesentlichen ebenen Metallscheibe ausgegangen wird.

Die CH 639 178 A zeigt einen selbstsichernden Lagerbolzen zur Sicherung gegen axiale Verschiebung beim Einbau in Maschinenteilen, der aus einem gebogenen Blechstreifen hergestellt ist. Hierdurch wird ein hohler, rohrartiger Bolzen gebildet, in dem Längsschlitze ausgebildet sein können.

Der Erfindung liegt die Aufgabe zugrunde, ein Verfahren zum Herstellen eines Lagerbolzen-Bauteils zu schaffen, das bei geringen Herstellungskosten eine sichere Lageranbindung und ein geringes Gesamtgewicht ermöglicht.

Diese Aufgabe wird durch ein Verfahren nach Anspruch 1 gelöst. Die Unteransprüche beschreiben bevorzugte Weiterbildungen. Hierbei ist ergänzend das erfindungsgemäß hergestellte Lagerbolzen-Bauteil nach Anspruch 19 vorgesehen.

Erfindungsgemäß wird somit ein Herstellungsverfahren geschaffen, mit dem das Lagerbolzen-Bauteil nicht als Kaltpress- und Schmiedeteil, sondern als Umformteil aus Blech hergestellt wird. Hierdurch kann es leichter und mit geringeren Herstellkosten ausgebildet werden.

Erfindungsgemäß wird das Lagerbolzen-Bauteil hierbei einteilig als Blechumformteil hergestellt, wobei sowohl der Bolzen als auch der Befestigungsbereich durch ein Umformverfahren mit mehreren aufelnanderfolgenden Prozessschritten hergestellt werden können. Durch eine bevorzugte Kaltumformung wird die Festigkeit des Stahlblechs erhöht, so dass es abschließend eine hohe Festigkeit zur Aufnahme der einwirkenden Kräfte und Momente aufweist.

Zur Herstellung wird ein Ausgangsblech aus einem hinreichend verformbare, duktilen, kostengünstigen Stahl direkt vom Coil abgewickelt und kann in mehreren Prozessschritten verformt werden. Hierbei wird vorzugsweise auch der Bolzen einteilig ohne Schweißnaht aus dem Stahlmaterial geformt und entsprechend der hintere Anbindungsbereich in gewünschter Dicke ausgeformt. Zur Ausbildung des Bolzens als Tube bzw. rohrförmiger Ansatz kann eine Tubenzieh-Technologie eingesetzt werden, bei der in mehreren aufeinander folgenden Prozessschritten zunächst ein Napf in das Ausgangsblech eingezogen wird und die so ausgebildete Tube nachfolgend in mehreren Prozessschritten gestaucht wird. Bei dieser Herstellung kann ein Folgeverbund-Verfahren eingesetzt werden, bei dem das Ausgangsblech in einzelnen Schritten durch ein Folgeverbundwerkzeug geschoben wird, bis in den aufeinander folgenden Umformschritten die gewünschten Formgebungen erreicht sind; im letzten Arbeitsgang werden die Teile vom Blechstreifen abgetrennt.

Vorteilhafterweise wird eine axiale Nachführung des Materials des Ausgangsblechs durchgeführt, um eine Ausdünnung der Tubenwand zu verhindern bzw. die gewünschte Wanddicke zu erreichen, die nachfolgend durch Stauchen weiter vergrößert wird.

Die Schweißung kann z.B. durch CO2-Schweißen oder auch durch Laserschweißen erfolgen. Zum Laserschweißen werden vorteilhafterweise an der Unterseite des Befestigungsbereiches ein oder mehrere Flansche angebracht. So kann ein vorderer Flansch zur Befestigung am äußeren Träger des Lehnenteils und ein hinterer Flansch zur Befestigung an einer inneren Blechplatte oder einem Querträger des Lehnenteils dienen.

Die Erfindung wird im Folgenden anhand der beiliegenden Zeichnungen an einer Ausführungsform erläutert. Es zeigen:

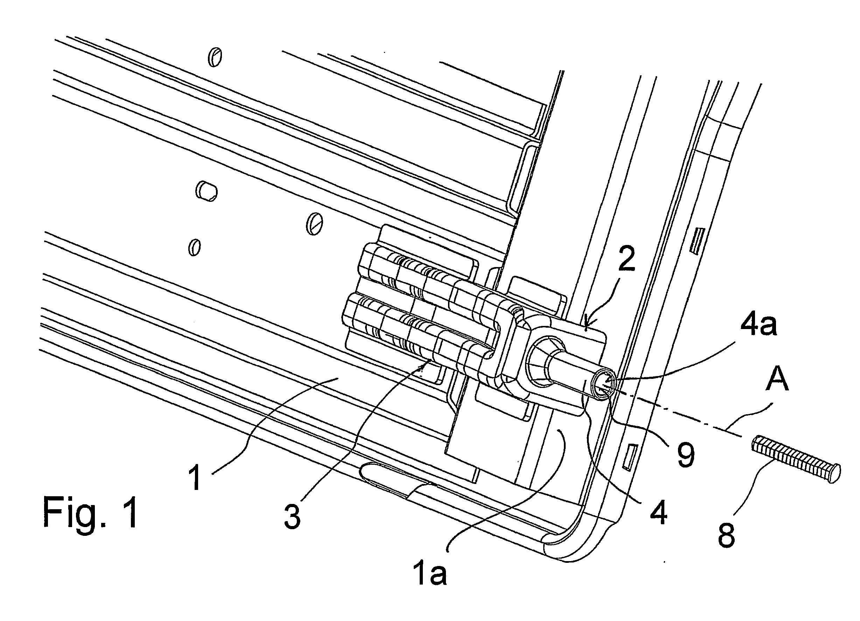

- Fig. 1: eine perspektivische Ansicht eines Lehnenteils mit befestig- tem Lagerbolzen-Bauteil;
- Fig. 2: eine weitere perspektivische Ansicht des Lagerbolzen- Bauteils;
- Fig. 3: eine Seitenansicht des Lagerbolzen-Bauteils;
- Fig. 4: eine Draufsicht auf das Lagerbolzen-Bauteil.
- Fig. 5: einen Axialschnitt durch die Tube bei der Herstellung des Bolzens.

Ein Lehnenteil 1 eines Fahrzeugsitzes ist schwenkbar an einem in den Figuren nicht gezeigten Sitzrahmen gelagert. Das Lehnenteil 1 kann insbesondere eine Rückenlehne, oder auch z.B. eine Durchlade oder ein anderes klappbares Funktionslehnenteil, z.B. mit Tischfunktion, sein.

Das Lehnenteil 1 ist an dem Sitzrahmen in einer Lehnenachse A schwenkbar gelagert, die durch ein am Lehnenteil 1 befestigtes Lagerbolzen-Bauteil 2 und eine am Sitzrahmen ausgebildete, das Lagerbolzen-Bauteil 2 aufnehmende, hier nicht gezeigte Lageraufnahme (Lagerauge) definiert ist.

Das Lagerbolzen-Bauteil 2 weist einen hinteren Befestigungsbereich 3 und einen vorderen Bolzen 4 auf. Der Befestigungsbereich 3 dient der Befestigung am Lehnenteil 1. Der Bolzen 4 ragt in seitlicher Richtung - entlang der Achse A - seitlich vor zum Einsatz in die Lageraufnahme des Sitzrahmens.

Erfindungsgemäß ist das Lagerbolzen-Bauteil 2 als einteiliges BlechUmformteil aus Stahl ausgebildet. Ergänzend können an der Unterseite des Befestigungsbereichs 3 seitlich vorstehende Flansche 5a, b befestigt werden, um eine Anbringung am Lehnenteil 1 durch Laserschweißen zu ermöglichen. Hierbei kann z. B. ein vorderer Flansch 5a zum Aufsetzen auf einen Vertikalträger des Lehnenteils 1 und ein hinterer Flansch 5b zum Aufsetzen auf ein mittleres Blech oder einen Querträger des Lehnenteils 1 angebracht werden. Grundsätzlich kann das Lagerbolzen-Bauteil 2 jedoch auch ohne diese Flansche 5a, b ausgebildet und z.B. durch CO2-Schweißen am Lehnenteil 1 befestigt werden.

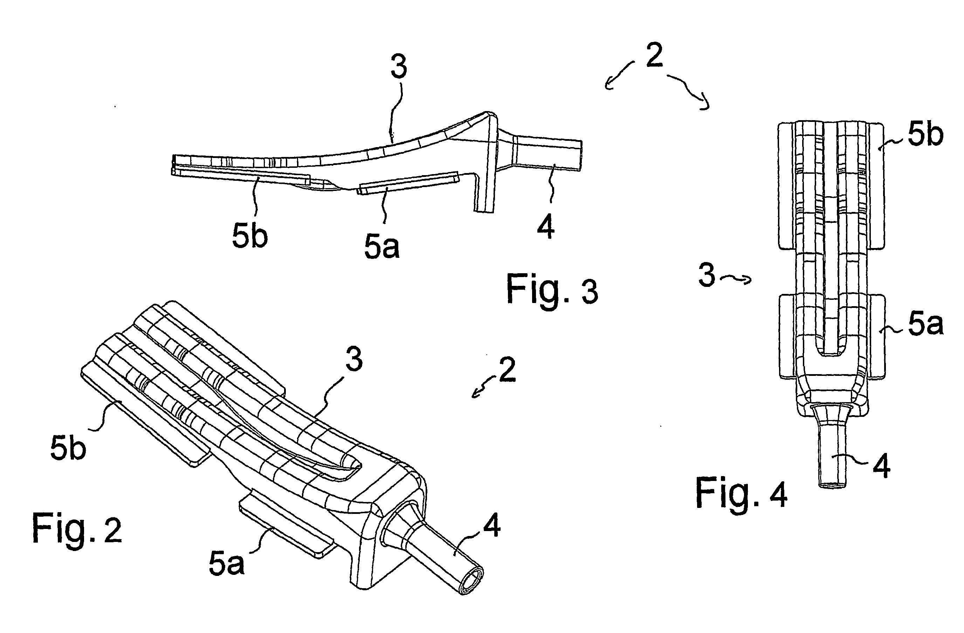

Der Befestigungsbereich 3 nimmt in seiner Höhe - wie z.B. in Figur 3 zu erkennen ist - zum Bolzen 4 hin vorteilhafterweise stetig zu. Der Befestigungsbereich 3 ist an seinem rechten, vorderen Ende auf eine Kante 1 a des Vertikalträgers des Lehnenteils 1 gesetzt und dort mittels einer Vertikalschweißung befestigt. Der Bolzen 4 ist z. B. in seinem hinteren Bereich zunächst etwas konisch und in seinem vorderen Bereich rohrförmig ausgebildet. Er weist ein Loch 4a mit einem Innengewinde 9 zur Aufnahme einer Schraube 8 auf, die - in an sich bekannter Weise - in die Lageraufnahme des Sitzrahmens eingesetzt wird. Die Schraube 8 ist hierbei nur schematisch dargestellt.

Die Herstellung des erfindungsgemäßen Lagerbolzen-Bauteils 2 erfolgt durch einen mehrstufigen Umformprozess. Hierbei kann ein Folgeverbund-verfahren eingesetzt werden, bei dem ein Ausgangsblech direkt von einem Coil aus kostengünstigem duktilen Stahl abgewickelt und durch ein Folgeverbundwerkzeug geführt wird. Zunächst wird der Bolzenschaft als Tube 4b hergestellt, indem in das Ausgangsblech ein Napf 10 mit größerem Durchmesser eingezogen wird und somit eine Tube 4b mit größerem Durchmesser und größerer Länge ausgebildet wird. Nachfolgend wird die derartig ausgebildete Tube 4b durch Stauchen in ihrer Länge und ihrem Durchmesser verkleinert unter Erhöhung ihres Wanddurchmessers, wozu in mehreren Prozessschritten ein Gesenk auf die Tube 4b einwirkt.

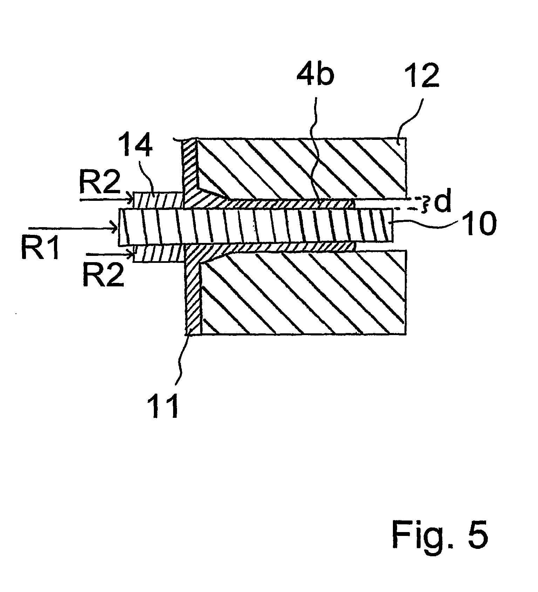

Die Herstellung des Bolzens 4 kann in mehreren, z. B. zwölf bis sechzehn Tiefziehvorgängen erfolgen. Fig. 5 zeigt sehr schematisch einen Axialschnitt bei einem derartigen Tiefziehvorgang. Das Ausgangsblech 11 ist auf einer Matrize 12 aufgenommen; der Napf 10 wird in den einzelnen Tiefziehvorgängen jeweils in Richtung R1 definiert durch das Ausgangsblech 11 gezogen. Um eine Ausdünnung der Wand der Tube 4b zu verhindern, sind vorzugsweise Nachführmittel 14 vorgesehen, die Material für die Tubenwand in Richtung R2 nachführen, so dass eine definierte Wanddicke d erreicht wird.

Nach Fertigstellung des Bolzens 4 wird der Befestigungsbereich 3 durch ein oder mehrere weitere Prozessschritte hergestellt, wobei z. B. ein einziger Tiefziehvorgang ausreichend sein kann.

Das Innengewinde 9 in dem Loch 4a des rohrförmigen Bolzens 4 kann bereits durch Rollformen in dem Umformwerkzeug oder auch nachfolgend durch Gewindeschneiden ausgebildet werden.

Die in dem vom Coil abgewickelten Blechstreifen ausgebildeten Lagerbolzen-Bauteile 2 werden abschließend im letzten Schritt vom Werkzeug abgeschnitten. Nachfolgend können wahlweise die Flansche 5 angebracht werden, falls derartige Flansche nicht bereits in dem Ausgangsblech mit ausgebildet werden.

Das Lagerbolzen-Bauteil 2 wird somit einteilig hergestellt und weist keine Schweißnähte auf. Das Ausgangsblech kann z.B. eine Dicke von 2,5 mm aufweisen.

## Patentansprüche

1. Verfahren zum Herstellen eines Lagerbolzen-Bauteils (2) zur Befestigung an einem Lehnenteil (1) eines Fahrzeugsitzes und zum Einsatz in eine Lageraufnahme eines Sitzrahmens,
wobei das Lagerbolzen-Bauteil (2) mit einem Befestigungsbereich (3) zur Befestigung an dem Lehnenteil (1) des Fahrzeugssitzes und einem Bolzen (4) zum schwenkbaren Einsatz in eine Lageraufnahme des Sitzrahmens hergestellt wird,
**dadurch gekennzeichnet, dass**
das Lagerbolzen-Bauteil (2) als einteiliges Umformteil aus Stahlblech hergestellt wird, und
als Ausgangsblech (11) ein Stahlblech direkt von einem Coil abgewickelt und verformt wird.

2. Verfahren nach Anspruch 1, **dadurch gekennzeichnet, dass** das Lagerbolzen-Bauteil (2) durch Kaltverformung aus dem Stahlblech hergestellt wird.

3. Verfahren nach einem der vorherigen Ansprüche, **dadurch gekennzeichnet, dass** ein Stahlblech in mehreren aufeinander folgenden Prozessschritten verformt wird.

4. Verfahren nach Anspruch 3, **dadurch gekennzeichnet, dass** ein Ausgangsblech in einem Folgeverbund-Verfahren verformt wird.

5. Verfahren nach Anspruch 4, **dadurch gekennzeichnet, dass** das Ausgangsblech durch ein Folgeverbundwerkzeug geschoben und in aufeinander folgenden Umformschritten verformt wird, bis die Formgebung des Lagerbolzen-Bauteils (2) erreicht ist.

6. Verfahren nach einem der Ansprüche 3 bis 5, **dadurch gekennzeichnet, dass** zunächst der Bolzenschaft des Bolzens (4) als Tube hergestellt wird, wobei in das Ausgangsblech ein Napf (10) eingezogen wird.

7. Verfahren nach Anspruch 6, **dadurch gekennzeichnet, dass** zunächst der Napf (10) derartig eingezogen wird, dass eine erste Tube mit einem größeren Durchmesser und größerer Länge als die Tube des späteren Bolzens ausgebildet wird und nachfolgend die erste Tube durch Stauchen in ihrer Länge und ihrem Durchmesser verkleinert wird unter Erhöhung ihrer Wanddicke (d).

8. Verfahren nach Anspruch 7, **dadurch gekennzeichnet, dass** zur Durchführung des Stauchens in mehreren Prozessschritten ein Gesenk auf die Tube (4b) einwirkt.

9. Verfahren nach einem der Ansprüche 6 bis 8, **dadurch gekennzeichnet, dass** die Tube ausgebildet wird, indem das Ausgangsblech (11) zwischen dem Napf (10) und einer Matrize (12) in mehreren Tiefziehvorgängen verformt wird.

10. Verfahren nach Anspruch 9, **dadurch gekennzeichnet, dass** zur Erhöhung der Wanddicke (d) der Tube (4b) Material in axialer Richtung nachgeführt wird.

11. Verfahren nach einem der Ansprüche 6 bis 10, **dadurch gekennzeichnet, dass** nach der Ausbildung des Bolzens (4) der Befestigungsbereich durch ein oder mehrere Prozessschritte ausgebildet wird.

12. Verfahren nach Anspruch 11, **dadurch gekennzeichnet, dass** zur Ausbildung des Befestigungsbereichs ein oder mehrere Tiefzlehvorgänge, z. B. nur ein einziger Tiefziehvorgang, durchgeführt wird.

13. Verfahren nach einem der vorherigen Ansprüche, **dadurch gekennzeichnet, dass** in einem letzten Verformungs-Arbeitsgang die hergestellten Lagerbolzen-Bauteile vom Blechstreifen abgetrennt werden.

14. Verfahren nach einem der vorherigen Ansprüche, **dadurch gekennzeichnet, dass** in dem Bolzen (4) ein Innengewinde (9) ausgebildet wird.

15. Verfahren nach Anspruch 14, **dadurch gekennzeichnet, dass** das Innengewinde (9) bereits durch Rollformen in dem Umformwerkzeug ausgebildet wird.

16. Verfahren nach Anspruch 14, **dadurch gekennzeichnet, dass** das innengewinde (9) nach der Umformung nachfolgend durch Gewindeschneiden ausgebildet wird.

17. Verfahren nach einem der vorherigen Ansprüche, **dadurch gekennzeichnet, dass** an der Unterseite des Befestigungsbereichs (3) ein oder mehrere seitlich vorstehende Flansche (5a, 5b) zur Laserverschweißung an einem Lehnenteil (1) ausgebildet werden.

18. Verfahren nach Anspruch 17, **dadurch gekennzeichnet, dass** die Flansche (5) beim Umformverfahren im Ausgangsblech ausgebildet werden.

19. Lagerbolzen-Bauteil (2), das durch ein Verfahren nach einem der vorherigen Ansprüche hergestellt ist, wobei zusätzlich durch Umformen an der Unterseite des Befestigungsbereichs (3) des Lagerbolzen-Bauteils (2) ein oder mehrere seitlich vorstehende Flansche (5a, 5b) zur Laserverschweißung an einem Lehnenteil (1) ausgebildet sind.

## Claims

1. Method of manufacturing a bearing pin component (2) for fastening to a backrest part (1) of a vehicle seat and for insertion in a bearing receptacle in a seat frame,
wherein the bearing pin component (2) is manufactured with a fastening region (3) for fastening to the backrest part (1) of the vehicle seat and with a pin (4) for pivotable insertion in a bearing receptacle in the seat frame,
**characterised in that**
the bearing pin component (2) is manufactured from steel sheet as a one-piece shaped part, and
a steel sheet is unwound, as the original sheet (11), direct from a coil and shaped.

2. Method according to claim 1,
**characterised in that**
the bearing pin component (2) is manufactured from the steel sheet by cold-forming.

3. Method according to one of the preceding claims,
**characterised in that** a steel sheet is formed in a number of successive process steps.

4. Method according to claim 3,
**characterised in that**
an original sheet is formed in a follow-on composite process.

5. Method according to claim 4,
**characterised in that**
the original sheet is pushed by a follow-up composite tool and formed in successive shaping steps until the shaping of the bearing pin component (2) is achieved.

6. Method according to one of claims 3 to 5,
**characterised in that**
the shaft of the pin (4) is first of all manufactured as a tube, a cup (10) being drawn into the original sheet.

7. Method according to claim 6,
**characterised in that**
the cup (10) is first of all drawn in in such a way that a first tube having a greater diameter and greater length than the tube of the future pin is constructed and said first tube is subsequently reduced in its length and diameter by compression, while increasing its wall thickness (d).

8. Method according to claim 7,
**characterised in that**
a forging die acts upon the tube (4b) for the purpose of carrying out the compressing operation in a number of process steps.

9. Method according to one of claims 6 to 8,
**characterised in that**
the tube is constructed through the fact that the original sheet (11) is formed between the cup (10) and a die (12) in a number of deep-drawing operations.

10. Method according to claim 9,
**characterised in that**
material is fed in afterwards in the axial direction for the purpose of increasing the wall thickness (d) of the tube (4b).

11. Method according to one of claims 6 to 10,
**characterised in that**,
after the construction of the pin (4), the fastening region is constructed by means of one or more process steps.

12. Method according to claim 11,
**characterised in that**
one or more deep-drawing operations, e.g. only a single deep-drawing operation, is carried out for the purpose of constructing the fastening region.

13. Method according to one of the preceding claims,
**characterised in that**
the bearing pin components manufactured are severed from the strip of sheet metal in a final forming operation.

14. Method according to one of the preceding claims,
**characterised in that**
an internal thread (9) is constructed in the pin (9).

15. Method according to claim 14,
**characterised in that**
the internal thread (9) is already constructed in the shaping tool by roll forming.

16. Method according to claim 14,
**characterised in that**
the internal thread (9) is constructed subsequently, after the shaping operation, by thread-cutting.

17. Method according to one of the preceding claims,
**characterised in that**
one or more laterally protruding flanges (5a, 5b) for laser welding to a backrest part (1) are constructed on the underside of the fastening region (3).

18. Method according to claim 17,
**characterised in that**
the flanges (5) are constructed in the original sheet during the shaping process.

19. Bearing pin component (2) which is manufactured by a method according to one of the preceding claims, wherein one or more laterally protruding flanges (5a, 5b) for laser welding to a backrest part (1) are additionally constructed, by shaping, on the underside of the fastening region (3) of the bearing pin component (2).

## Revendications

1. Procédé de fabrication d'un composant à tourillon (2) destiné à être fixé sur une partie du dossier (1) d'un siège de véhicule et à être inséré dans une réception du palier d'un bâti du siège,
le composant à tourillon (2) étant fabriqué avec une zone de montage (3) destinée à être fixée sur la partie du dossier (1) du siège de véhicule et avec un tourillon (4) destiné à être inséré de manière pivotable dans une réception du palier du bâti du siège,
**caractérisé en ce que**
le composant à tourillon (2) est fabriqué comme pièce monocorps déformée en tôle d'acier et que
comme tôle initiale (11), une tôle d'acier est dévidée directement sur une bobine et déformée.

2. Procédé suivant la revendication 1, **caractérisé en ce que** le composant à tourillon (2) est fabriqué par façonnage à froid à partir de la tôle d'acier.

3. Procédé suivant une des revendications précédentes, **caractérisé en ce qu'**une tôle d'acier est déformée au cours de plusieurs phases de processus successives.

4. Procédé suivant la revendication 3, **caractérisé en ce qu'**une tôle initiale est déformée selon un procédé multi-outils continu.

5. Procédé suivant la revendication 4, **caractérisé en ce que** la tôle initiale est poussée par un dispositif multi-outils et déformée au cours de phases de déformation successives jusqu'à obtention de la forme définitive du composant à tourillon (2).

6. Procédé suivant une des revendications 3 à 5, **caractérisé en ce que** l'on fabrique d'abord la tige du tourillon (4) en forme de tube en étirant un godet (10) dans la tôle initiale.

7. Procéde suivant la revendication 6, **caractérisé en ce que** l'on étire d'abord le godet (10) de manière à former un premier tube d'un diamètre et d'une longueur supérieurs au tube du tourillon définitif et que l'on diminue ensuite le premier tube par écrasement dans le sens de la longueur et du diamètre tout en augmentant l'épaisseur de paroi (d).

8. Procédé suivant la revendication 7, **caractérisé en ce qu'**une étampe agit sur le tube (4b) pour exécuter l'écrasement en plusieurs phases de processus.

9. Procédé suivant une des revendications 6 à 8, **caractérisé en ce que** le tube est réalisé en déformant la tôle initiale (11) entre le godet (10) et une matrice (12) en plusieurs processus d'emboutissage.

10. Procédé suivant la revendication 9, **caractérisé en ce que** de la matière est avancée dans le sens axial pour augmenter l'épaisseur de la paroi (d) du tube (4b).

11. Procédé suivant une des revendications 6 à 10, **caractérisé en ce qu'**après la réalisation du tourillon (4), la zone de montage est réalisée en une ou plusieurs phases de processus.

12. Procédé suivant la revendication 11, **caractérisé en ce que** pour la réalisation de la zone de montage, un ou plusieurs processus d'emboutissage sont exécutés, par exemple un seul processus d'emboutissage.

13. Procédé suivant une des revendications précédentes, **caractérisé en ce que** les composants à tourillon fabriqués sont séparés du ruban de tôle.

14. Procédé suivant une des revendications précédentes, **caractérisé en ce qu'**un filet intérieur (9) est réalisé dans le tourillon (4).

15. Procédé suivant la revendication 14, **caractérisé en ce que** le filet intérieur (9) est déjà réalisé par roulage dans l'outil de façonnage.

16. Procédé suivant la revendication 14, **caractérisé en ce que** le filet intérieur (9) est réalisé par taraudage après le façonnage.

17. Procédé suivant une des revendications précédentes, **caractérisé en ce qu'**un ou plusieurs collets (5a, 5b), déstinés à être soudés au laser sur une partie du dossier (1), sont réalisés sur la face inférieure de la zone de montage (3).

18. Procédé suivant la revendication 17, **caractérisé en ce que** les collets (5) sont réalisés dans la tôle initiale lors du procédé de façonnage.

19. Composant à tourillon (2), qui est fabriqué au moyen d'un procédé suivant une des revendications précédentes, un ou plusieurs collets (5a, 5b), destinés à être soudés au laser sur une partie de dossier (1), étant en plus réalisés par façonnage sur la face inférieure de la zone de montage (3) du composant à tourillon (2) en vue d'une soudure au laser sur une partie du dossier (1).
